# FASCICULE DE BREVET EUROPEEN

(11) **EP 0 598 661 B1**
(45) Date de publication et mention de la délivrance du brevet: **27.02.2002**
(21) Numéro de dépôt: 93402787.1
(22) Date de dépôt: 17.11.1993
(51) Int. Cl.: G01N 29/22, G01N 29/26

(54) **Procédé et dispositif de contrôle ultrasonore industriel de pièces par retournement temporel**
Verfahren und Vorrichtung für industrielle Ultraschallsteuerung von drehenden Teilen
Method and apparatus for industrial ultrasonic control of pieces by time rotation

(30) Priorité: 18.11.1992 FR 9213834
(43) Date de publication de la demande: 25.05.1994
(73) Titulaire: Snecma Moteurs, 75015 Paris (FR)
(72) Inventeur: Beffy, Lionel, F-91260 Juvisy (FR); Chakroun, Najet, F-92390 Villeneuve la Garenne (FR); Fink, Alexandre Mathias, F-92190 Meudon (FR); Mangenet, Gérard Yves, F-91860 Epinay sous Senart (FR); Wu, François Jean, F-91400 Orsay (FR)
(74) Mandataire: Berrou, Paul

(56) Documents cités:
- EP-A- 0 081 244
- EP-A- 0 486 689
- FR-A- 2 234 561
- PATENT ABSTRACTS OF JAPAN vol. 16, no. 407 (P-1411) & JP-A-04 136 758 (KYUSHU ELECTRIC POWER CO.) 11 Mai 1992

## Description

La présente invention concerne un procédé et un dispositif de contrôle ultrasonore industriel de pièces par retournement temporel destinés à la détection de défauts internes, tels que fissures, criques ou autres imperfections, existant au niveau de toutes pièces de révolution comme, par exemple, des roues de turbines ou de compresseurs.

On connaît déjà des dispositifs de contrôle non destructifs reposant sur l'émission d'ondes ultrasonores. Par exemple, le document FR.2 234 561 décrit un procédé et un dispositif de contrôle ultrasonore de pièces de révolution dans lequel l'analyse d'un tube est effectuée suivant une trajectoire de balayage hélicoïdal autour du tube au moyen de plusieurs sondes montées par paires sur un anneau tournant en rotation autour du tube. Ces dispositifs particulièrement bien adaptés au contrôle de matériaux métalliques s'avèrent toutefois imprécis lorsqu'il s'agit de rechercher des hétérogénéités dans des matériaux plus complexes tels que les alliages spéciaux, les composites ou les céramiques ou bien encore dans des matériaux élaborés selon la métallurgie des poudres. En effet, dans ces matériaux, et plus particulièrement dans le titane, il est difficile, voire impossible, d'exploiter les signaux d'écho délivrés par le transducteur ultrasonore du fait de la présence importante d'échos parasites, provenant de la nature "diffusante" d'un tel matériau.

On connaît par ailleurs par le brevet FR 2 642 640 un dispositif de repérage et de focalisation d'ondes destiné principalement à la recherche et à la destruction de calculs dans les tissus et mettant en oeuvre un procédé d'amplification ultrasonore à conjugaison de phase dit aussi "de retournement temporel". Ce procédé consiste, après émission d'un faisceau ultrasonore non focalisé et réception de l'écho renvoyé par la source à localiser, à réémettre ce signal d'écho après retournement temporel de sa répartition dans le temps et de sa forme.

Toutefois, ce procédé essentiellement statique ne peut être utilisé de manière industrielle sur des pièces de révolution, car il nécessiterait, pour atteindre au moins les résultats des systèmes actuels, la mise au point d'une mécanique complexe et très performante permettant d'alterner, en un temps très bref, déplacements et arrêts nécessaires à l'auto-focalisation propre à cette technique.

La présente invention a pour but de s'affranchir de cette difficulté et d'assurer un contrôle plus performant qu'un contrôle classique tout en ne nécessitant pas ou peu de modifications des architectures mécaniques existantes.

Ce but est atteint par un procédé de contrôle ultrasonore de pièces de révolution dans lequel l'analyse d'une pièce est effectuée pendant la rotation de la pièce du niveau de n zones d'analyse réparties angulairement de manière uniforme dans une configuration circulaire et comportant les étapes suivantes :
a) émission, à partir d'une matrice de transducteurs, d'un faisceau d'ondes ultrasonores non focalisé dirigé vers une première zone d'analyse de la pièce, celle-ci étant examinée par secteurs ou par couronnes,
b) réception d'un premier signal d'écho par chacun des transducteurs de la matrice et mémorisation de la répartition dans le temps et de la forme de premiers signaux d'activation obtenus par retournement temporel des premiers signaux d'écho reçus,
c) répétition des étapes a) et b) pour les autres secteurs ou couronnes de la pièce,
d) émission, au niveau de la première zone d'analyse de la pièce des signaux d'activation relatifs à cette zone, déterminés précédemment et mémorisés à l'étape b),
e) réception d'un second signal d'écho par chacun des transducteurs de la matrice et mémorisation de la nouvelle répartition dans le temps et de la forme de seconds signaux d'activation obtenus par retournement temporel des seconds signaux d'écho reçus,
f) répétition des étapes d) et e) pour chacune des autres zones d'analyse.

Le recours à la technique du retournement temporel permet une meilleure focalisation des ondes ultrasonores sur les seuls défauts de la pièce analysée éliminant ainsi la plupart des échos parasites, cette focalisation pouvant être mise en oeuvre dans le cadre des architectures mécaniques existantes grâce à l'imbrication des différents cycles d'émission/réception réalisée lors de la mémorisation.

Avantageusement, il est procédé à la répétition des étapes d) à f) jusqu'à obtention d'une auto-focalisation sur le défaut interne le plus important. Il est alors particulièrement simple d'en déterminer sa forme et sa position et de décider ou non du rejet de la pièce, l'analyse de l'ensemble de celle-ci étant réalisée après un déplacement linéaire soit de tranches successives grâce à un déplacement longitudinal du capteur soit de couronnes successives grâce à un déplacement radial de ce capteur.

L'invention propose également un dispositif pour la mise en oeuvre du procédé ci-dessus comportant une matrice de transducteurs, des moyens de déplacement en rotation de la pièce, et, associée à chaque transducteur, une voie de traitement comportant un récepteur fournissant un signal d'écho pour une première mémoire qui délivre à son tour ce même signal, retourné temporellement, pour une seconde mémoire générant un signal d'activation qui commande un émetteur relié au transducteur correspondant.

Avantageusement, la seconde mémoire est organisée en tampon circulant, les données à émettre relatives à un secteur d'analyse déterminé étant emmagasinées à chaque rotation de la pièce dans des emplacements identiques et déterminés, ladite seconde mémoire possédant autant d'emplacements que de zones à analyser.

La commande de l'émetteur est synchronisée sur la rotation de la pièce à analyser, afin de permettre des réémissions successives au niveau des mêmes points, ce qui permet de renforcer, à chaque rotation de la pièce, le processus d'auto-focalisation.

De préférence, cette synchronisation de l'émetteur est réalisée par comparaison à l'aide d'un moyen comparateur des coordonnées des points d'émission de chaque zone préalablement emmagasinées dans un registre mémoire avec les coordonnées angulaires réelles de la pièce mesurées par un codeur.

D'autres caractéristiques et avantages de la présente invention ressortiront mieux de la description qui va suivre, faite à titre indicatif et non limitatif, en référence aux dessins annexés sur lesquels :
- la figure 1 est une vue simplifiée, en coupe longitudinale, d'un dispositif de contrôle ultrasonore selon un mode préférentiel de réalisation de l'invention,
- les figures 2 à 5 sont des schémas de principe montrant les phases principales de mise en oeuvre du procédé selon l'invention dans un mode préférentiel de réalisation,
- les figures 6 et 7 sont des schémas de principe montrant la mise en oeuvre du procédé selon l'invention dans un second mode de réalisation,
- la figure 8 est un schéma synoptique des circuits de synchronisation des émissions d'ondes ultrasonores, et
- la figure 9 est un graphique comparant les performances en matière de rapport signal/bruit du procédé dit de retournement temporel avec les procédés de l'art antérieur.

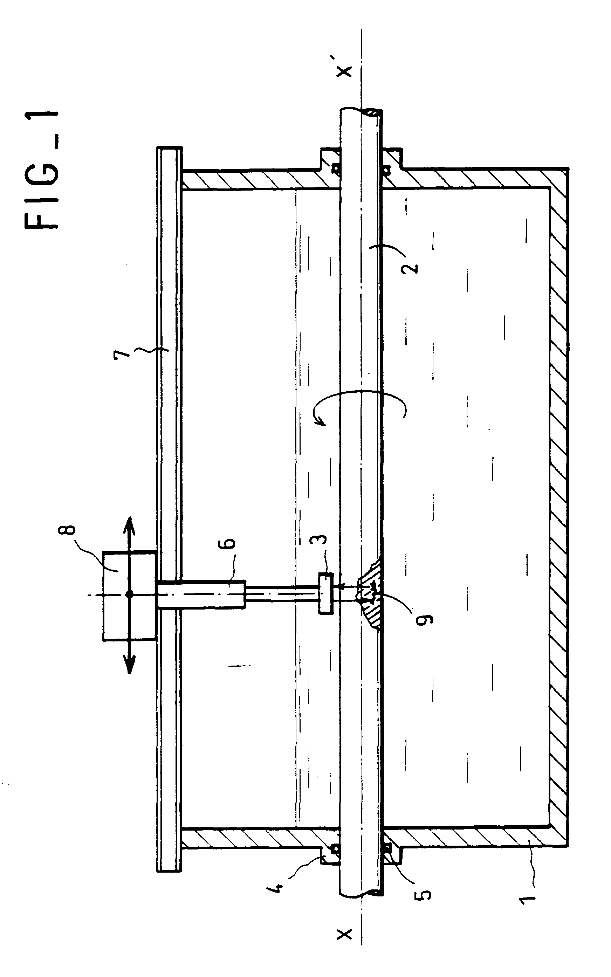

La figure 1 montre, en coupe longitudinale, le dispositif de contrôle par ultrasons d'une pièce de révolution, par exemple une billette de titane, selon un mode de réalisation préférentielle de l'invention.

Ce dispositif comprend une cuve 1 pleine d'un liquide de couplage acoustique dont le niveau de la surface est maintenu constant grâce, par exemple, à un système de trop-plein (non représenté). Dans un souci de simplification, les canalisations de remplissage et de vidange ont été omises. A l'intérieur de la cuve 1 sont plongés une pièce à contrôler 2 et un palpeur à ultrasons 3. Des paliers 4 assurent un centrage rigoureux de la pièce de révolution 2 selon son axe XX' et des moyens d'étanchéité 5 permettent d'éviter une trop grande dispersion du liquide de couplage. Le palpeur 3 est maintenu rigoureusement perpendiculaire à l'axe XX' par un support 6 qui est par ailleurs réglable, notamment en hauteur. En outre, et de façon connue, le dispositif comporte des moyens, non représentés, pour entraîner en rotation la pièce 2 avec une vitesse angulaire déterminée et des moyens (7, 8) pour déplacer longitudinalement le palpeur 3.

Le palpeur 3 est un palpeur émetteur/récepteur constitué de pastilles piézo-électriques organisées selon une matrice comme il sera décrit plus avant.

L'utilisation de la cuve d'immersion 1 présente de nombreux avantages et, notamment, évite de mettre en contact le palpeur avec la pièce à contrôler, le couplage étant assuré par de l'eau additionnée éventuellement de produits mouillants tels que de l'huile. Toutefois, cette immersion totale n'est pas obligatoire dans le cadre de la présente invention et le contrôle peut être assuré en plaçant simplement le palpeur contre la pièce à contrôler, au moyen d'un mince film de couplant.

Le principe de mesure utilisé repose sur l'émission d'un train d'ondes ultrasonores E qui pénètre dans la pièce à contrôler 2 et est en partie réfléchi R en présence d'un défaut 9 dans l'épaisseur de la pièce. La fréquence d'émission des trains d'ondes successifs est appelée fréquence de récurrence de la mesure. Le contrôle de la pièce de révolution 2 est réalisé en continu, la pièce étant en rotation.

Dans le cadre de cette réalisation préférentielle, le contrôle est réalisé par tranches successives par déplacement longitudinal, pas à pas, du palpeur 3. Toutefois, dans un autre exemple de réalisation, permettant notamment l'analyse de disques minces, l'émission est réalisée au niveau d'une couronne du disque, un déplacement toujours linéaire mais radial du palpeur permettant alors un contrôle de l'ensemble de la pièce.

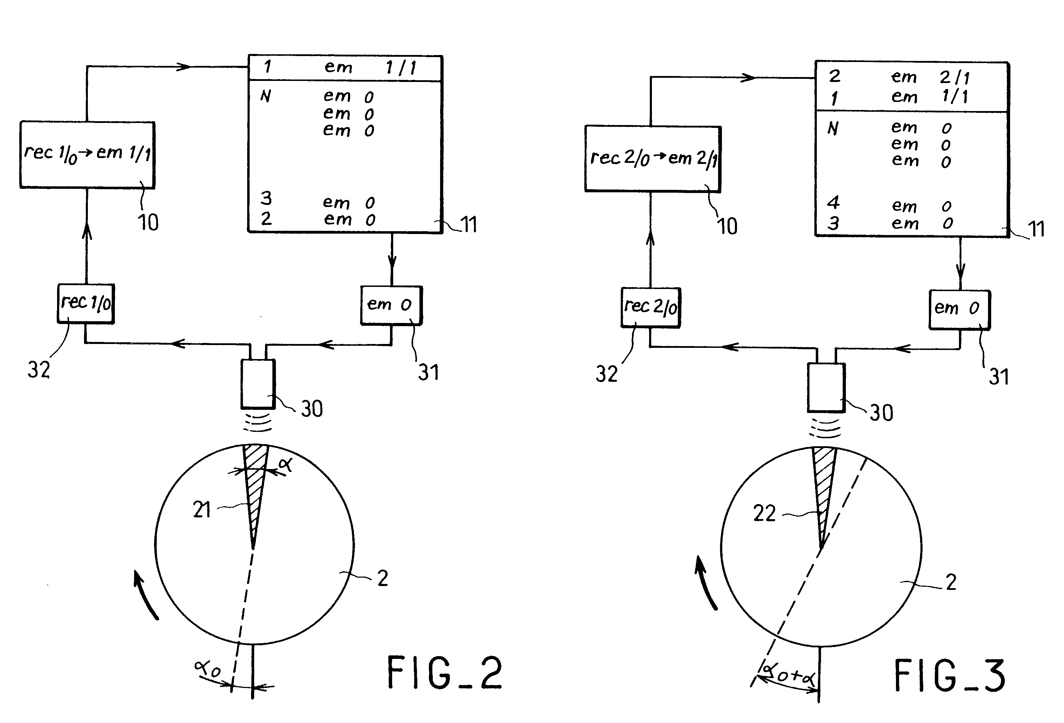

Le procédé mis en oeuvre selon l'invention va être maintenant décrit en regard des figures 2 à 5 qui en décrivent les différentes phases, cette description se limitant à l'analyse d'une seule tranche de la pièce.

Dans une première étape, on illumine, à partir d'une matrice de transducteurs 30 délivrant un faisceau d'ondes ultrasonores non focalisé, la surface circonférencielle d'un secteur 21 de la pièce à contrôler. Ce secteur est précisément défini, la pièce 2 étant divisée en n secteurs répartis angulairement de manière uniforme et de coordonnées déterminées.

Dans une seconde étape, on capte l'écho reçu par chacun des transducteurs de la matrice et l'on mémorise dans une première mémoire 10 la répartition dans le temps et la forme de chacun des signaux d'écho reçu. Selon le principe du retournement temporel tel que décrit dans le brevet français 2 642 640 précité, on retourne alors temporellement ces signaux d'écho en ce qui concerne leur forme et leur échelonnement dans le temps, c'est-à-dire en inversant leur chronologie temporelle, les derniers signaux reçus étant renvoyés les premiers, et l'on emmagasine les signaux d'activation ainsi obtenus dans une seconde mémoire 11. On renouvelle ensuite, pour chacun des autres secteurs, le processus d'émission/réception et mémorisation précédent. A la fin de l'analyse de l'ensemble des secteurs, on dispose, au niveau de la seconde mémoire 11, de l'ensemble des signaux d'activation, c'est-à-dire des signaux d'écho retournés relatifs à la première émission du faisceau d'ondes ultrasonores non focalisé sur la surface circonférencielle d'une tranche déterminée.

Dans l'étape suivante, on procède alors à une nouvelle illumination de la surface circonférencielle du premier secteur précédemment analysé, par les signaux d'activation relatifs à ce secteur, déterminés antérieurement, et stockés dans la seconde mémoire 11.

Cette illumination réalisée par l'intermédiaire de la matrice de transducteurs permet de générer une onde exactement focalisée, dans la mesure où les transducteurs ont une réponse linéaire ou présentent les mêmes caractéristiques de réponse à l'émission et à la réception. En outre, les distorsions à l'aller dues à la nature diffusante de la pièce 2 sont exactement compensées par les distorsions sur le trajet de retour. A une étape ultérieure, on procède à la réception, par chacun des transducteurs de la matrice, de l'écho résultant de cette seconde illumination par les signaux d'activation et l'on mémorise les signaux reçus dans la première mémoire 10 pour procéder à leur retournement temporel et délivrer ainsi à la seconde mémoire 11 des seconds signaux d'activation résultant de ce deuxième retournement.

Ces deux étapes d'émission/réception sont ensuite reprises, pour chacun des autres secteurs, afin de couvrir l'ensemble de la tranche analysée. A chaque fois, les signaux d'activation émis sont ceux résultant du retournement effectué précédemment sur les signaux d'écho issus de l'émission du faisceau d'ondes ultrasonores non focalisé sur la surface circonférencielle relative au secteur déterminé analysé.

A l'issue de l'analyse complète de la tranche considérée, on dispose dans la seconde mémoire 11 de l'ensemble des seconds signaux d'activation relatifs à chacun des n secteurs. Il doit être noté que ce processus d'émission/réception peut être renouvelé autant de fois que désiré, les signaux d'activation résultant de chaque nouvelle émission étant emmagasinés au lieu et place des signaux d'activation de l'émission précédente. En pratique, on peut remarquer que deux émissions focalisées à la suite de l'émission non focalisée initiale (soit trois passages) sont suffisantes pour permettre une extraction du défaut le plus important. Ce nombre n'est toutefois pas limitatif, dans des cas extrêmes, il est en effet possible d'extraire ce défaut dès après le premier passage, c'est-à-dire à l'issue de l'émission initiale du faisceau d'ondes ultrasonores non focalisé.

Il va maintenant être décrit les différents moyens pour la mise en oeuvre du procédé selon l'invention.

Le faisceau d'ondes ultrasonores focalisé ou non est fourni par une matrice de transducteurs 30 pouvant être disposés linéairement ou de façon bidimensionnelle. De façon connue, cette matrice peut être plane ou éventuellement concave pour assurer une pré-focalisation géométrique du faisceau.

A chaque transducteur, est associée une voie de traitement comportant un récepteur 32 fournissant le signal d'écho, issu du faisceau initial non focalisé ou des signaux d'activation ultérieurs, à la première mémoire 10 qui délivrera le signal d'écho retourné. La structure de cet ensemble réception-mémorisation peut être identique à celle mentionnée dans le brevet précité et comporter, par exemple, un échantillonneur, un convertisseur analogique/numérique et une mémoire du type LIFO ("Last In First Out " - Dernier entré premier sorti). Ce faisceau initial est généré par un émetteur 31 recevant les informations à emettre de la seconde mémoire 11 qui reçoit au fur et à mesure de leur élaboration les signaux d'écho retournés relatifs à chacun des secteurs parcourus.

La figure 2 montre notamment les données emmagasinées dans la seconde mémoire 11 à l'issue d'une première émission/réception d'un faisceau d'ondes non focalisé sur un premier secteur 21. On peut observer que l'emplacement mémoire numéroté 1 et correspondant au premier secteur 21 analysé qui, initialement, comportait la répartition temporelle et la forme du signal non focalisé em 0 se retrouve chargé par le signal d'activation em 1/1 correspondant au signal d'écho retourné issu du signal d'écho reçu rec 1/0 en réponse à l'envoi de ce signal non focalisé em 0. Il doit être noté que l'emplacement mémoire est constitué d'un ensemble d'emplacements mémoires élémentaires pouvant recevoir chacun un échantillon du signal reçu, le nombre d'échantillons dépendant de la fréquence d'échantillonnage de ce signal et de la période d'observation, c'est-à-dire de prise en compte des échos. En outre, le train d'ondes non focalisé correspondant à l'émission simultanée, pour tous les transducteurs, d'une impulsion de courte durée, le signal em 0 sera avantageusement constitué d'un ensemble de valeurs nulles à l'exception de quelques-unes (ce nombre étant lié à la fréquence d'échantillonnage).

La figure 3 montre notamment les données emmagasinées dans la seconde mémoire 11 à l'issue de l'examen d'un second secteur 22 distant angulairement d'un angle α du premier secteur. On peut observer que, dans l'emplacement mémoire numéroté 2, initialement chargé par le signal em 0 (voir figure 1), est maintenant emmagasiné le signal d'activation em 2/1 correspondant au signal d'écho retourné issu du signal d'écho reçu rec 2/0 en réponse à l'envoi du signal initial em 0 au niveau du second secteur 22.

Lorsque les n secteurs auront été analysés, la seconde mémoire 11 sera chargée par N signaux d'activation em 1/1 à em N/1 occupant n emplacements mémoire.

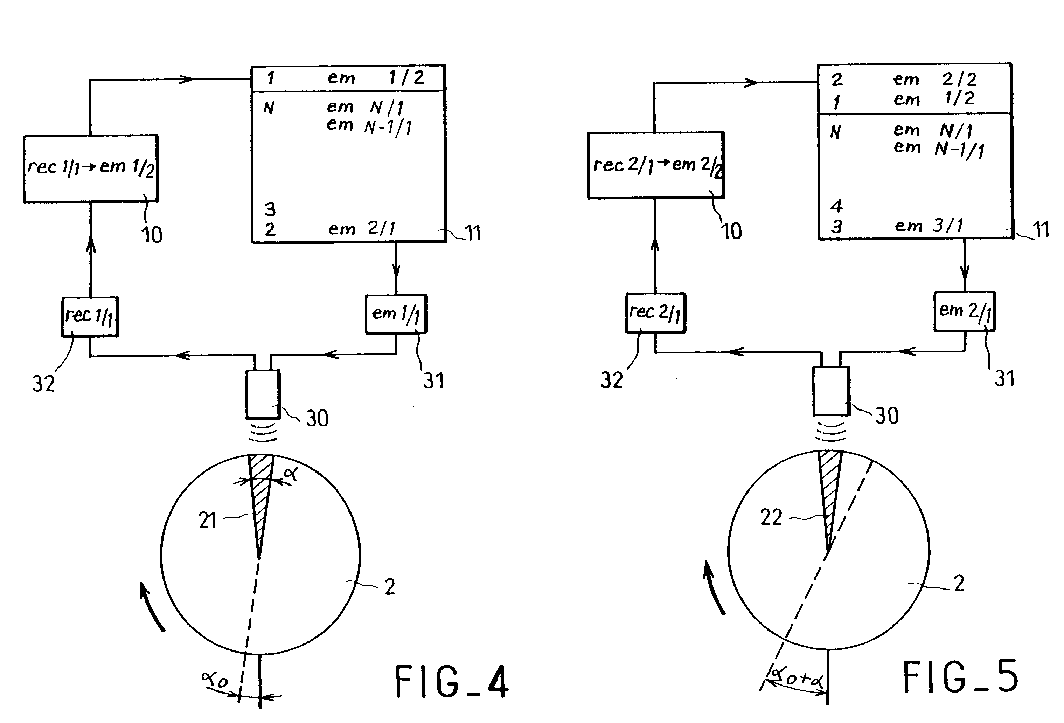

La figure 4 montre notamment les données emmagasinées dans la seconde mémoire 11 l'issue du second passage de contrôle du premier secteur 21. Il doit être noté que, pour assurer un fonctionnement correct du dispositif, il est nécessaire que les émissions successives sur un même secteur soient réalisées aux mêmes positions, d'où la nécessité d'un système de synchronisation dont la structure sera décrite plus avant. La mémoire 11 comporte dans son premier emplacement le signal d'activation em 1/2 correspondant au signal d'écho retourné issu du signal d'écho reçu rec 1/1 en réponse à l'envoi du signal d'activation précédemment emmagasiné em 1/1 et destiné à l'illumination du premier secteur 21. Dans les autres emplacements, on trouve bien évidemment les autres signaux d'activation em 2/1 à em N/1 correspondant aux autres secteurs. L'examen du secteur suivant 22, à la figure 5, va entraîner le chargement dans la seconde mémoire 11 d'un second signal d'activation em 2/2 en remplacement du précédent em 2/1 résultant de l'analyse du passage précédent. En fin de contrôle, à l'issue de ce deuxième passage, la seconde mémoire 11 sera chargée de N signaux d'activation em 2/2 à em N/2.

Le processus précédent peut être répété autant de fois que nécessaire pour obtenir une extraction des défauts internes de la pièce à contrôler par auto-focalisation. Ainsi, après i passages, la seconde mémoire sera chargée par les signaux d'activation em 1/i à em N/i.

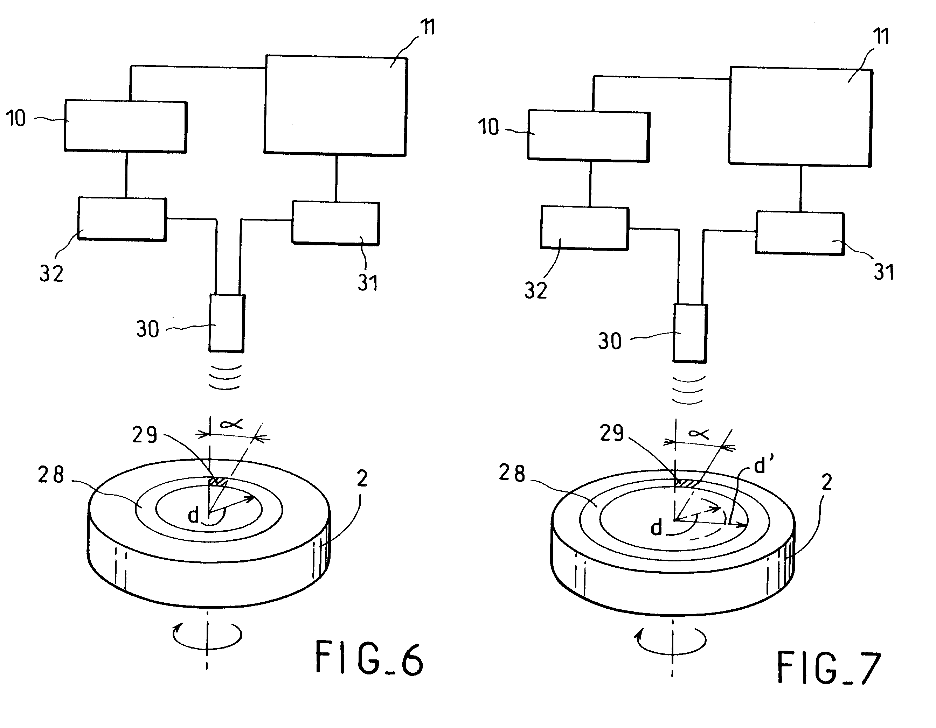

Les figures 6 et 7 montrent le procédé selon l'invention dans le cadre d'un second mode de réalisation permettant le contrôle de disques minces. Le contrôle est réalisé également en continu, le disque 2 étant en rotation. L'analyse est maintenant effectuée par couronnes successives 28, un déplacement radial du transducteur 30, d'un pas déterminé d'-d, permettant une analyse complète de la pièce.

Cette analyse est réalisée au niveau de n parties sectorielles 29 de la couronne 28 qui se présentent comme les n secteurs circonférentiels définis précédemment et dont l'analyse est réalisée identiquement selon le procédé décrit plus haut.

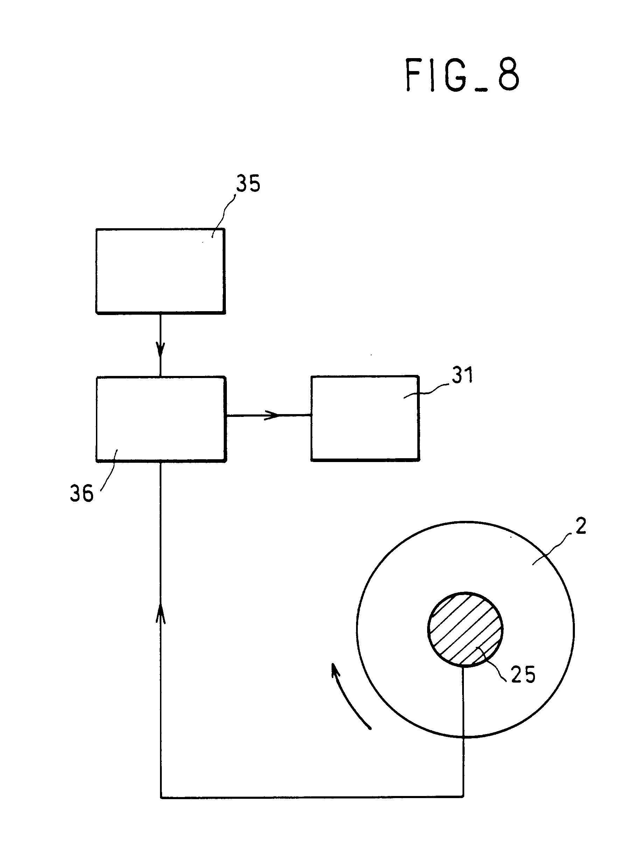

La figure 8 est un schéma simplifié des moyens de synchronisation des différentes émissions soit au niveau de la surface circonférencielle d'un secteur déterminé soit au niveau de la surface d'une partie sectorielle déterminée.

De façon connue, un codeur 25 est associé aux moyens de déplacement en rotation de la pièce à contrôler 2 et fournit avec précision la position angulaire de cette pièce par rapport à une référence déterminée. Avantageusement, ce codeur est du type codeur numérique absolu. Les coordonnées des positions des différentes émissions étant, par exemple, stockées préalablement dans un registre mémoire 35, il est alors possible de réaliser une synchronisation de ces émissions par comparaison, grâce à un comparateur 36, des coordonnées mémorisées et des coordonnées relevées par le codeur 25. La pièce 2 étant en rotation, les différentes émissions se suivront au rythme des coïncidences entre les coordonnées angulaires de la pièce 2 délivrées par le codeur 25 et les coordonnées des tirs issus du registre 35. Il est évident que l'utilisation d'un codeur absolu n'est pas limitative, il est en effet tout à fait possible d'obtenir une telle synchronisation en ayant recours à un codeur incrémental.

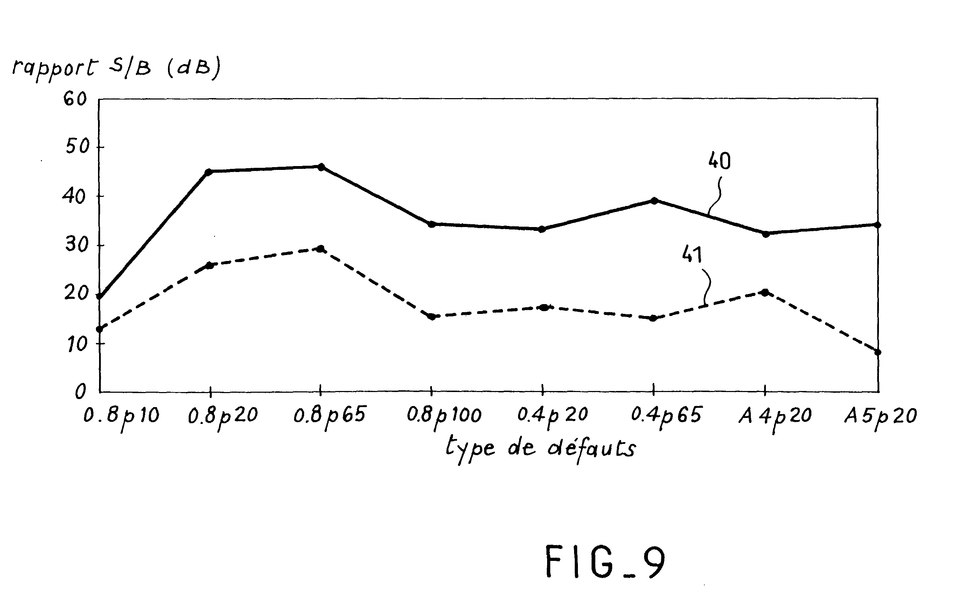

La figure 9 montre les performances comparées du procédé dit de retournement temporel par rapport aux techniques classiques de contrôle ultrasonore non destructif, en matière de rapport signal/bruit.

Ces performances statiques sont conservées dans le cadre du procédé dynamique de l'invention. En effet, si l'on considère les vitesses tangentielles actuelles mises en oeuvre pour ce type de mesure, qui sont de l'ordre de 500 mm/s, on peut montrer que la fréquence de récurrence des émissions/réceptions serait de 50 Hz pour un pas d'avance de 10 mm, ce qui est parfaitement compatible avec les objectifs industriels, notamment en matière de temps de contrôle, fixés lors de la conception du dispositif de contrôle selon l'invention.

Les mesures sont effectuées d'une part avec un transducteur classique focalisé mis en oeuvre dans le cadre d'une technique classique de contrôle ultrasonore et d'autre part avec une matrice de transducteur en composite céramique mis en oeuvre dans le cadre du procédé dit de retournement temporel.

La pièce testée est un disque de titane de diamètre 100 mm dans lequel ont été incrustés deux types de défauts : des trous à fond plat usinés de 0,4 et 0,8 mm de diamètre avec des profondeurs variables 10, 20, 65 et 100 mm et des inclusions d'impuretés par métallurgie des poudres de diamètre 1,1 (A4) et 0,7 mm (A5) à des profondeurs de 20 mm.

Le contrôle a été effectué à colonne d'eau constante de 120 mm à une fréquence de 3 MHz.

Il doit être noté que ces conditions de contrôle ne sont aucunement limitatives, d'autres analyses ayant été effectuées dans des conditions différentes, à la fréquence de 5 MHz par exemple.

On observe alors que tous les défauts précités ont été détectés et qu'ensuite le procédé de retournement temporel (Courbe 40) se révèle nettement plus performant que le contrôle classique (Courbe 41) puisque, pour chaque défaut, il présente un gain en rapport signal/bruit d'au moins 20 dB et pouvant atteindre près de 30 dB. Il est donc important de noter la très grande supériorité de l'analyse des défauts internes par le procédé de l'invention et cela d'autant plus qu'il est encore possible d'améliorer ces performances en procédant à une optimisation de la matrice aux niveaux de la taille des éléments transducteurs et de leur rayon de courbure notamment.

## Revendications

1. Procédé de contrôle ultrasonore de pièces de révolution, **caractérisé en ce que**, l'analyse d'une pièce étant effectuée pendant la rotation de la pièce, au niveau de n zones d'analyse de cette pièce, les n zones d'analyse étant réparties angulairement de manière uniforme dans une configuration circulaire. Il comporte les étapes suivantes :
a) émission, à partir d'une matrice de transducteurs, d'un faisceau d'ondes ultrasonores non focalisé dirigé vers une première zone d'analyse de cette pièce,
b) réception d'un premier signal d'écho par chacun des transducteurs de la matrice et mémorisation de la répartition dans le temps et de la forme de premiers signaux d'activation obtenus par retournement temporel des premiers signaux d'écho reçus,
c) répétition des étapes a) et b) pour les (n-1) autres zones d'analyse déterminées,
d) émission, au niveau de la première zone d'analyse de la pièce des signaux d'activation relatifs à cette zone, déterminés précédemment et mémorisés à l'étape b),
e) réception d'un second signal d'écho par chacun des transducteurs de la matrice et mémorisation de la nouvelle répartition dans le temps et de la forme de seconds signaux d'activation obtenus par retournement temporel des seconds signaux d'écho reçus,
f) répétition des étapes d) et e) pour chacune des (n-1) autres zones d'analyse déterminées précédentes.

2. Procédé de contrôle ultrasonore selon la revendication 1, **caractérisé en ce qu'**en outre il est procédé au moins une fois à la répétition des étapes d) à f).

3. Procédé de contrôle ultrasonore selon la revendication 1 ou la revendication 2, **caractérisé en ce que** ladite pièce est analysée par tranches successives, chaque tranche étant divisée en n secteurs dont la surface circonférentielle constitue ladite zone d'analyse.

4. Procédé de contrôle ultrasonore selon la revendication 1 ou la revendication 2, **caractérisé en ce que** ladite pièce est analysée par couronnes successives, chaque couronne étant divisée en n parties sect orielles dont la surface constitue ladite zone d'analyse.

5. Procédé de contrôle ultrasonore selon la revendication 1 ou la revendication 2 et la revendication 3, **caractérisé en ce que** l'analyse d'une tranche suivante est réalisée après déplacement longitudinal, d'un pas déterminé, de la matrice de transducteurs.

6. Procédé de contrôle ultrasonore selon la revendication 1 ou la revendication 2 et la revendication 4, **caractérisé en ce que** l'analyse d'une couronne suivante est réalisée par un déplacement radial, d'un pas déterminé, de la matrice de transducteurs.

7. Dispositif de contrôle ultrasonore de pièces de révolution, **caractérisé en ce qu'**il comporte une matrice de transducteurs (30), des moyens de déplacement en rotation de la pièce pour positionner successivement n zones d'analyse en regard de la matrice de transducteur, ces n zones d'analyse étant réparties uniformément sur la pièce et selon une configuration circulaire, et, associée à chaque transducteur, une voie de traitement comportant un récepteur (32) fournissant un signal d'écho pour une première mémoire (10) qui délivre à son tour ce même signal, retourné temporellement, pour une seconde mémoire (11) générant un signal d'activation qui commande un émetteur (31) relié au transducteur correspondant.

8. Dispositif de contrôle ultrasonore selon la revendication 7, **caractérisé en ce que** ladite seconde mémoire (11) est organisée en tampon circulant, les données à émettre relatives à une zone d'analyse déterminée étant emmagasinées à chaque rotation de la pièce (2) dans des emplacements identiques et déterminés, ladite seconde mémoire possédant autant d'emplacements que de zones à analyser.

9. Dispositif de contrôle ultrasonore selon la revendication 7 ou la revendication 8, **caractérisé en ce que** la commande de l'émetteur (31) est synchronisée sur la rotation de la pièce à analyser (2), afin de permettre des réémissions successives au niveau des mêmes points.

10. Dispositif de contrôle ultrasonore selon la revendication 9, **caractérisé en ce que** la synchronisation de l'émetteur (31) est réalisée par comparaison à l'aide d'un moyen comparateur (36) des coordonnées des points d'émission de chaque zone préalablement emmagasinées dans un registre mémoire (35) avec les coordonnées angulaires réelles de la pièce (2) mesurées par un codeur (25).

## Patentansprüche

1. Verfahren zur Ultraschallsteuerung von drehenden Teilen,
**dadurch gekennzeichnet,**
**dass** es, da die Analyse eines Teils an dem in Drehbewegung befindlichen Teil im Bereich von n Analysezonen dieses Teils durchgeführt wird, wobei die n Analysezonen in kreisförmiger Konfiguration in winkelmäßig gleichförmigen Abschnitten nebeneinander liegen, aus den folgenden Verfahrensschritten besteht:
a) Aussenden eines nicht gebündelten Ultraschallwellenstrahls von einer Ultraschallstrahlermatrize zu einer ersten Analysezone dieses Teils,
b) Empfang eines ersten Echosignals durch jeden der Ultraschallstrahler der Matrize und Speichern der Verteilung in der Zeit und der Form der ersten Aktivierungssignale, die durch zeitliches Umkehren der ersten empfangenen Echosignale erhalten werden,
c) Wiederholen der Verfahrensschritte a) und b) mit den (n-1) anderen bestimmten Analysezonen,
d) Aussenden von zuvor bestimmten und in Verfahrensschritt b) gespeicherten Aktivierungssignalen, die sich auf die erste Analysezone des Teils beziehen, im Bereich dieser Zone,
e) Empfang eines zweiten Echosignals durch jeden der Ultraschallstrahler der Matrize und Speichern der neuen Verteilung in der Zeit und der Form der zweiten Aktivierungssignale, die durch zeitliches Umkehren der zweiten empfangenen Echosignale erhalten werden,
f) Wiederholen der Verfahrensschritte d) und e) mit jeder der (n-1) weiteren vorherigen bestimmten Analysezonen.

2. Verfahren zur Ultraschallsteuerung nach Anspruch 1,
**dadurch gekennzeichnet,**
**dass** mindestens einmal die Verfahrensschritte d) bis f) wiederholt werden.

3. Verfahren zur Ultraschallsteuerung nach Anspruch 1 oder 2,
**dadurch gekennzeichnet,**
**dass** das genannte Teil in aufeinanderfolgenden Scheiben analysiert wird, wobei jede Scheibe in n Sektoren unterteilt wird, deren Außenumfangsfläche die genannte Analysezone bildet.

4. Verfahren zur Ultraschallsteuerung nach Anspruch 1 oder 2,
**dadurch gekennzeichnet,**
**dass** das genannte Teil in aufeinanderfolgenden Kränzen analysiert wird, wobei jeder Kranz in n Sektorabschnitte unterteilt wird, deren Oberfläche die genannte Analysezone bildet.

5. Verfahren zur Ultraschallsteuerung nach Anspruch 1 oder 2 und Anspruch 3,
**dadurch gekennzeichnet,**
**dass** die Analyse einer nachfolgenden Scheibe nach einem Verschieben der Ultraschallstrahlermatrize um einen bestimmten Schritt in Längsrichtung erfolgt.

6. Verfahren zur Ultraschallsteuerung nach Anspruch 1 oder 2 und Anspruch 4,
**dadurch gekennzeichnet,**
**dass** die Analyse eines nachfolgenden Kranzes nach einem Verschieben der Ultraschallstrahlermatrize um einen bestimmten Schritt in radialer Richtung erfolgt.

7. Vorrichtung zur Ultraschallsteuerung von drehenden Teilen,
**dadurch gekennzeichnet,**
**dass** sie eine Ultraschallstrahlermatrize (30) aufweist, sowie Mittel zum Drehen des Teils aufweist, so dass nacheinander n Analysezonen der Ultraschallstrahlermatrize gegenüber positioniert werden können, wobei diese n Analysezonen in kreisförmiger Konfiguration gleichmäßig über das Teil verteilt sind, sowie in Verbindung mit jedem Ultraschallstrahler eine Bearbeitungsstrecke aufweist, die einen Empfänger (32) enthält, der ein Echosignal für einen ersten Speicher (10) abgibt, der seinerseits dieses Signal, nachdem es zeitlich umgekehrt wurde, an einen zweiten Speicher (11) abgibt, der ein Aktivierungssignal erzeugt, das einen mit dem entsprechenden Ultraschallstrahler verbundenen Sender (31) steuert.

8. Vorrichtung zur Ultraschallsteuerung nach Anspruch 7,
**dadurch gekennzeichnet,**
**dass** dieser zweite Speicher (11) als umlaufender Pufferspeicher organisiert ist, wobei die auszusendenden Daten bezüglich einer bestimmten Analysezone bei jeder Umdrehung des Teils (2) an den gleichen, bestimmten Plätzen gespeichert werden, wobei dieser zweite Speicher ebenso viele Speicherplätze wie Analysezonen besitzt.

9. Vorrichtung zur Ultraschallsteuerung nach Anspruch 7 oder 8,
**dadurch gekennzeichnet,**
**dass** die Steuerung des Senders (31) mit der Drehung des zu analysierenden Teils (2) synchronisiert wird, um aufeinander folgende erneute Aussendungen im Bereich der gleichen Stellen zu ermöglichen.

10. Vorrichtung zur Ultraschallsteuerung nach Anspruch 9,
**dadurch gekennzeichnet,**
**dass** die Synchronisierung des Senders (31) mit Hilfe einer Vergleichseinrichtung (36) durch Vergleichen der Koordinaten der Aussendepunkte jeder zuvor in einem Speicherregister (35) gespeicherten Zsne mit den von einem Kodierer (25) gemessenen Ist-Winkelkoordinaten des Teils (2) erfolgt.

## Claims

1. An ultrasonic testing process for objects of revolution, **characterised in that** the object is analysed in n analysis zones during rotation of the object, the n analysis zones being distributed angularly and uniformly in a circular configuration, the process comprising the following steps:
(a) transmission of an unfocussed beam of ultrasonic waves from a transducer matrix towards a first analysis zone of the object;
(b) reception of a first echo signal by each transducer of the matrix and storage of the time distribution and of the shape of first trigger signals obtained by time reversal of the received first echo signals;
(c) repetition of steps (a) and (b) for the other (n-1) predetermined analysis zones;
(d) transmission, at the level of the first analysis zone of the object, of the trigger signals relating to said zone which were previously determined and stored in step (b);
(e) reception of a second echo signal by each transducer of the matrix and storage of the new time distribution and of the shape of second trigger signals obtained by time reversal of the received second echo signals;
(f) repetition of steps (d) and (e) for each of the other (n-1) analysis zones previously determined.

2. An ultrasonic testing process according to claim 1, **characterised in that** steps (d) to (f) are repeated at least once.

3. An ultrasonic testing process according to claim 1 or claim 2, **characterised in that** said object is analysed in consecutive slices, each slice being divided into n sectors whose peripheral surface forms said analysis zone.

4. An ultrasonic testing process according to claim 1 or claim 2, **characterised in that** said object is analysed in consecutive rings each divided into n sectorial parts whose surface forms said analysis zone.

5. An ultrasonic testing process according to claim 1 or claim 2 and claim 3, **characterised in that** the analysis of a following slice is performed after the transducer matrix has been displaced lengthwise by a predetermined amount.

6. An ultrasonic testing process according to claim 1 or claim 2 and claim 4, **characterised in that** the analysis of a following ring is performed by the transducer matrix being displaced radially by a predetermined amount.

7. A device for ultrasonic testing of objects of revolution, **characterised in that** it comprises: a transducer matrix (30), means for rotating the object for consecutively positioning n analysis zones opposite the transducer matrix, the n analysis zones being distributed uniformly on the article in a circular configuration, and, associated with each transducer, a processing channel comprising a receiver (32) providing an echo signal for a first memory (10) which in turn outputs the same signal, time reversed, for a second memory (11), generating a trigger signal which drives a transmitter (31) connected to the corresponding transducer.

8. A device for ultrasonic testing according to claim 7, **characterised in that** said second memory (11) is arranged as a circulating buffer, the data to be transmitted for a predetermined analysis zone being stored at each rotation of the object (2) in identical and predetermined places, said second memory having as many places as the number of zones to be analysed.

9. A device for ultrasonic testing according to claim 7 or claim 8, **characterised in that** the drive of the transmitter (31) is synchronized with the rotation of the object (2) to be analysed so as to enable consecutive retransmissions at the same points.

10. A device for ultrasonic testing according to claim 9, **characterised in that** synchronisation of the transmitter (31) is produced by comparison, through the agency of a comparator means (36), of the co-ordinates of the transmission points of each zone, said co-ordinates having previously been stored in a memory register (35) with the actual co-ordinates of the object (2) as measured by an encoder (25).
